# EUROPEAN PATENT APPLICATION

(11) **EP 4 534 041 A1**
(43) Date of publication of application: **09.04.2025**
(21) Application number: 24204726.4
(22) Date of filing: 04.10.2024
(51) Int. Cl.: A61C 8/00

(54) **DENTAL IMPLANT AND DENTAL IMPLANT ASSEMBLY HAVING THE SAME**

(30) Priority: 06.10.2023 KR 20230133730; 09.07.2024 KR 20240090657
(71) Applicant: Osstemimplant Co., Ltd., Gangseo-gu Seoul 07789 (KR)
(72) Inventor: PARK, Hyun Soo, 07789 Gangseo-gu, Seoul (KR); KIM, Dong Chan, 07789 Gangseo-gu, Seoul (KR)
(74) Representative: Klunker IP Patentanwälte PartG mbB

(57) **Abstract**

One embodiment of the present invention provides a dental implant forming an artificial dental root by being implanted into an alveolar bone according to rotation about an axis, the dental implant including an internal groove formed inside a top portion to enable coupling of an abutment for prosthesis supporting, and an external screw part having threads formed from a top of an outer peripheral surface to a bottom thereof to enable implantation into the alveolar bone, wherein the internal groove includes an upper side inclined part positioned at a top entrance part of the dental implant and having a circular cross-section and an inner diameter gradually decreasing downward, a polygonal part formed below the upper side inclined part and having a transverse cross-section formed in a polygonal shape, a boring part formed below the polygonal part and having a circular shape whose diameter is larger than a diameter of a circle circumscribing the polygonal shape of the polygonal part, a circular vertical part formed below the boring part, and an internal screw part formed below the circular vertical part and having threads for abutment coupling, whose diameter is smaller than a diameter of a circle inscribing the polygonal shape of the polygonal part, formed thereon, wherein an angle at which the upper side inclined part of the internal groove is tilted relative to the axis is set to range from 14° to 16°.

## Description

### CROSS-REFERENCE TO RELATED APPLICATION

This application claims priority to and the benefit of Korean Patent Application No. 10-2023-0133730, filed on October 6, 2023 and Korean Patent Application No. 10-2024-0090657, filed on July 9, 2024, the disclosure of which is incorporated herein by reference in its entirety.

### BACKGROUND

### 1. Field of the Invention

The present invention relates to a dental implant and a dental implant assembly having the same.

### 2. Discussion of Related Art

Dental implants (hereinafter referred to simply as "implants") inserted into the alveolar bone have been used for a long time, and one of titanium, a titanium alloy material, and a ceramic material that have excellent biocompatibility is selected and used as a material of implants that are commonly used nowadays.

Implants must be manufactured to not only be able to functionally substitute for the actual teeth but also be able to be used for as long as the actual teeth by properly distributing the load applied to the teeth.

Implants implanted into the alveolar bone are broadly classified into an external connection type and an internal connection type according to the form in which an implant is coupled to an abutment. The external connection type has an advantage in that the implant inserted into the bone is relatively sturdy, but has a disadvantage in that bone resorption may occur at a boundary part due to a wide gap between the implant and the abutment at an initial stage after the implant is implanted, which makes it prone to bacterial colonization.

Accordingly, in recent years, the internal connection type has been mainly used. In the internal connection type, a coupling structure to which a lower end of an abutment is coupled and which includes a hexagonal part or the like is formed inside an implant, and an upper end part of the coupling structure on which the abutment is seated is formed to be inclined. The internal connection type has an advantage in that the implant implantation success rate is high due to minimizing the initial bone resorption by eliminating a space in which bacterial colonization may occur. However, the internal connection type has a disadvantage in that the possibility of fracture of the implant inserted into the bone is relatively high due to a structural limitation caused by the abutment entering the implant.

Fracture is caused by fatigue, which is a phenomenon in which the strength of a material or structure decreases and ultimately destruction occurs as the number of repetitions of stress increases when repeated stress occurs in the material or structure. A dental implant is a structure for replacing a lost tooth and repeatedly receives stress due to masticatory movements, and thus the possibility of an occurrence of fatigue destruction (generally referred to as "fatigue fracture") cannot be eliminated.

During masticatory movements, a vertical masticatory force in an axial direction of an implant and a horizontal masticatory force perpendicular to the axial direction may act in combination on an abutment. Since a lower end of the abutment that is coupled to the inside of the implant periodically applies tensile stress to the internal structure of the implant, fatigue fracture in the form of vertical fracture or horizontal fracture may be caused in the implant.

Therefore, there is a need for an internal structure of an implant that overcomes the causes of fatigue fracture and facilitates stress distribution for stably using the implant for a long period.

### SUMMARY OF THE INVENTION

The present invention is directed to providing a dental implant and a dental implant assembly having the same that can secure high stiffness by including an internal groove having an internal structure and dimensions that facilitate stress distribution.

The present invention provides a dental implant forming an artificial dental root by being implanted into an alveolar bone according to rotation about an axis, the dental implant including an internal groove formed inside a top portion to enable coupling of an abutment for prosthesis supporting, and an external screw part having threads formed from a top of an outer peripheral surface to a bottom thereof to enable implantation into the alveolar bone, wherein the internal groove includes an upper side inclined part positioned at a top entrance part of the dental implant and having a circular cross-section and an inner diameter gradually decreasing downward, a polygonal part formed below the upper side inclined part and having a transverse cross-section formed in a polygonal shape, a boring part formed below the polygonal part and having a circular shape whose diameter is larger than a diameter of a circle circumscribing the polygonal shape of the polygonal part, a circular vertical part formed below the boring part, and an internal screw part formed below the circular vertical part and having threads for abutment coupling, whose diameter is smaller than a diameter of a circle inscribing the polygonal shape of the polygonal part, formed thereon, wherein an angle at which the upper side inclined part of the internal groove is tilted relative to the axis is set to range from 14° to 16°.

In the present invention, a ratio of a thickness of a wall of the circular vertical part, which is perpendicular to the axis, to a maximum outer diameter of the dental implant may be set to range from 0.15 to 0.3.

In the present invention, an inner diameter of the circular vertical part may be set to be 0.5 mm to 1.8 mm less than a maximum inner diameter of the upper side inclined part.

In the present invention, a ratio of a depth from a topmost of the upper side inclined part to a bottommost of the circular vertical part to a depth from the topmost of the upper side inclined part to a bottommost of the internal screw part may be set to range from 0.5 to 0.7.

In the present invention, the depth from the topmost of the upper side inclined part to the bottommost of the internal screw part may be set to range from 4 mm to 7 mm.

In the present invention, the depth from the topmost of the upper side inclined part to the bottommost of the circular vertical part may be set to range from 3 mm to 5 mm.

In the present invention, the external screw part may include an external top thread section machined down to a predetermined section downward from a top of an outer peripheral surface of the dental implant so that first crests having a first height and first valleys having a first depth are formed by a first bit, and an external bottom thread section machined below the external top thread section so that second crests having a second height and second valleys having a second depth are formed by a second bit having a machining surface shape and a width that are different from a machining surface shape and a width of the first bit, wherein the first height of the first crests may be formed to be smaller than the second height of the second crests, and the first depth of the first valleys may be formed to be smaller than the second depth of the second valleys.

In the present invention, the threads of the external top thread section and the external bottom thread section may have the same pitches and the same crest widths.

In the present invention, the first valleys and the second valleys may include a first curved part connecting from an upper portion of the valley to a side portion thereof and a second curved part connecting from the side portion of the valley to a lower portion thereof.

In the present invention, a curvature of the first curved part may be larger than a curvature of the second curved part.

In the present invention, the first valleys and the second valleys may be formed to be horizontally asymmetrical about a virtual line that is perpendicular to the axis and passes through a center of a width of the valleys.

In the present invention, a cutting edge formed to be partially cut may be provided at a bottom of the outer peripheral surface of the dental implant, and the cutting edge may include a reverse helical section formed in an opposite direction of a helical direction of the threads and a helical section formed in the helical direction of the threads.

The present invention provides a dental implant assembly including a dental implant forming an artificial dental root by being implanted into an alveolar bone according to rotation about an axis and an abutment coupled to the dental implant to support a prosthesis and having a fastening screw insertion hole formed therein, which extends from a top of the abutment to a bottom thereof to enable insertion of a fastening screw, wherein the dental implant includes an internal groove formed inside a top portion to enable coupling of an abutment for prosthesis supporting, and an external screw part having threads formed from a top of an outer peripheral surface to a bottom thereof to enable implantation into the alveolar bone, wherein the internal groove includes an upper side inclined part positioned at a top entrance part of the dental implant and having a circular cross-section and an inner diameter gradually decreasing downward, a polygonal part formed below the upper side inclined part and having a transverse cross-section formed in a polygonal shape, a boring part formed below the polygonal part and having a circular shape whose diameter is larger than a diameter of a circle circumscribing the polygonal shape of the polygonal part, a circular vertical part formed below the boring part, and an internal screw part formed below the circular vertical part and having threads for abutment coupling, whose diameter is smaller than a diameter of a circle inscribing the polygonal shape of the polygonal part, formed thereon, wherein an angle at which the upper side inclined part of the internal groove is tilted relative to the axis is set to range from 14° to 16°.

In the present invention, the abutment may include an upper side part configured to protrude to an outer portion of the dental implant and have the prosthesis attached thereto and a lower side part disposed below the upper side part and inserted into the internal groove, wherein the abutment may further include a holding part disposed at a bottom of the lower side part and configured to be elastically deformed and forcibly fitted into an inner circumferential surface of the circular vertical part to temporarily fix the abutment to an inner portion of the dental implant when the abutment is inserted into the dental implant.

In the present invention, the holding part may be provided as a plurality of holding parts that are disposed to be spaced apart along a periphery of the bottom of the lower side part or may be provided as a single holding part that is formed to form a closed loop along the periphery of the bottom of the lower side part.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIGS. 1A and 1B are a perspective view and a plan view, respectively, of a dental implant according to the present invention;
FIG 2 is a front view of the dental implant according to the present invention;
FIG 3 is a cross-sectional perspective view of the dental implant according to the present invention;
FIGS. 4 and 5 are cross-sectional views of the dental implant according to the present invention;
FIG 6A is a view for describing a method of machining a polygonal part according to the present invention, and FIGS. 6B and 6C are views for comparing a case in which a boring part is absent and the boring part is present when machining the polygonal part;
FIG 7 is an enlarged cross-sectional view of a portion of the dental implant according to the present invention;
FIG 8 is a view showing a structure of an internal groove of the dental implant according to the present invention;
FIG 9 is a view for describing cases of machining an external screw part of the dental implant according to the present invention using bits having different shapes;
FIG 10 is an enlarged view of a portion of the external screw part according to the present invention;
FIG 11 is a cross-sectional view of a dental implant assembly according to the present invention;
FIG 12 is a front view of an abutment according to the present invention; and
FIG 13 is an enlarged view of a portion of FIG 11.

### DETAILED DESCRIPTION OF EXEMPLARY EMBODIMENTS

Hereinafter, the present invention will be described with reference to the accompanying drawings. The present invention may be implemented in various different forms and is not limited to the embodiments described herein. Also, in the drawings, in order to clearly describe the present invention, parts irrelevant to the description are omitted, and like parts are denoted by like reference numerals throughout the specification.

Throughout the specification, when a certain part is described as being "connected" to another part, this not only includes a case in which the part is "directly connected" to the other part, but also includes a case in which the part is "indirectly connected" to the other part with another member disposed therebetween.

Also, when a certain part is described as "including" a certain component, unless specifically described otherwise, this means that the part may further include other components instead of excluding other components.

Hereinafter, embodiments of the present invention will be described in detail with reference to the accompanying drawings.

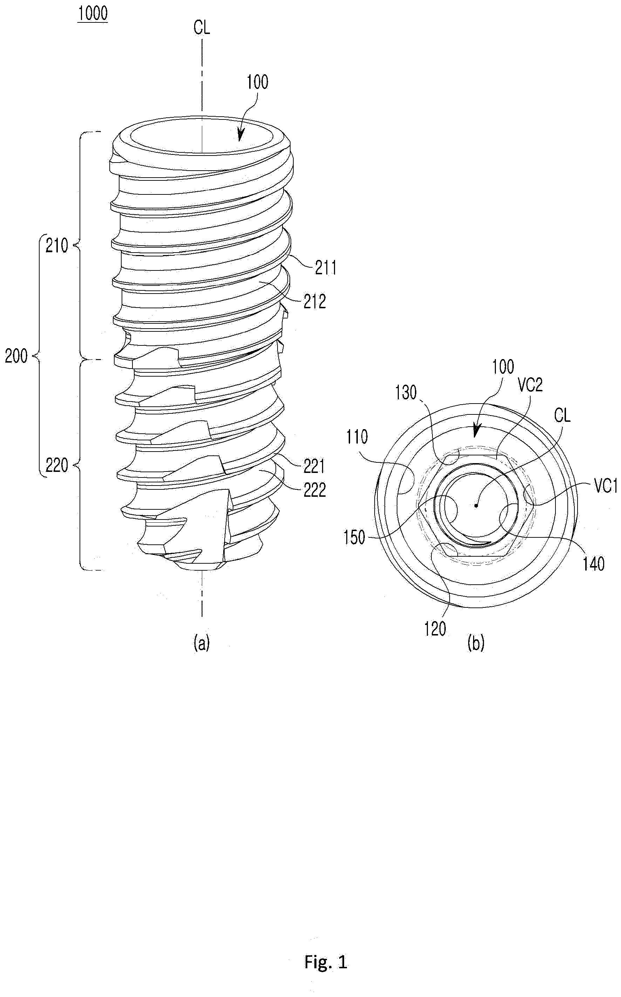

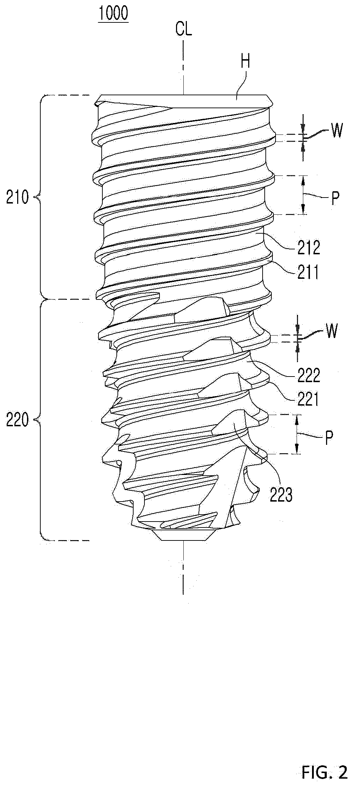

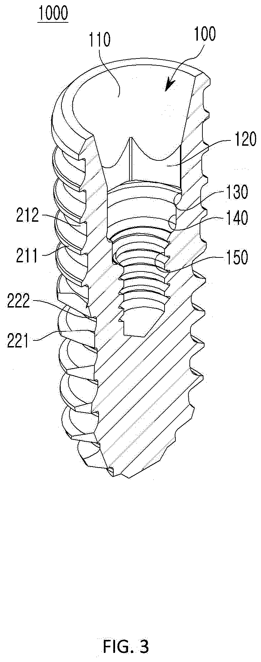

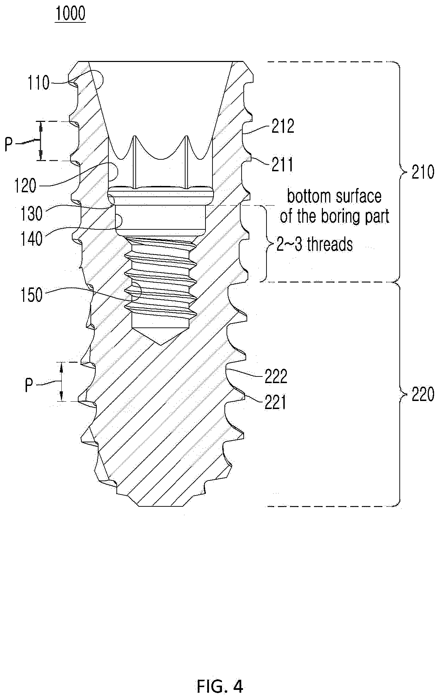

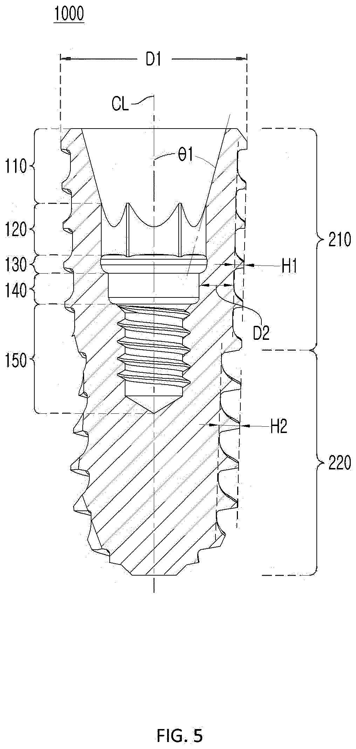

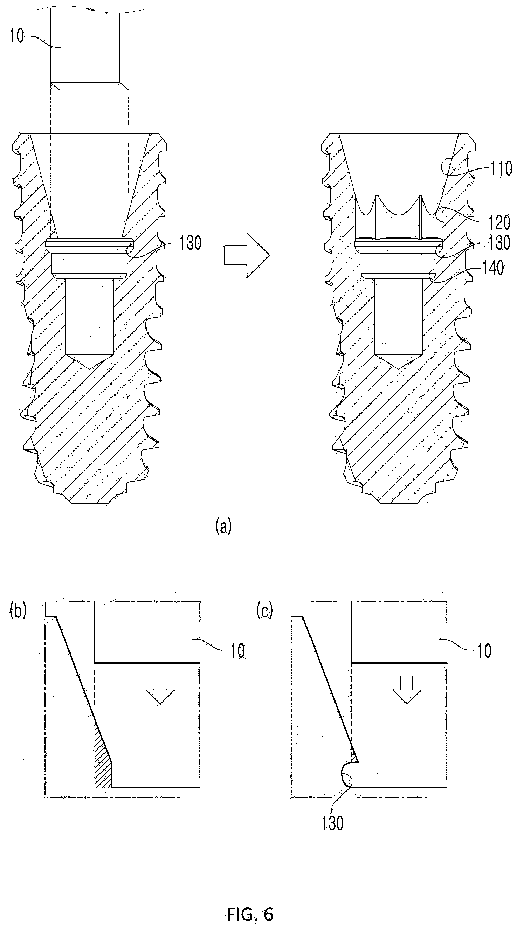

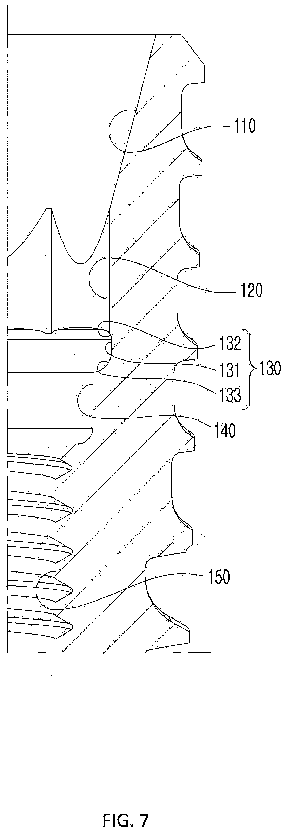

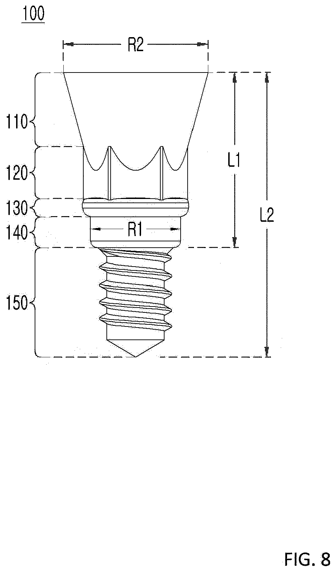

FIGS. 1A and 1B are a perspective view and a plan view, respectively, of a dental implant according to the present invention, FIG 2 is a front view of the dental implant according to the present invention, FIG 3 is a cross-sectional perspective view of the dental implant according to the present invention, FIGS. 4 and 5 are cross-sectional views of the dental implant according to the present invention, FIG 6A is a view for describing a method of machining a polygonal part according to the present invention, FIGS. 6B and 6C are views for comparing a case in which a boring part is absent and the boring part is present when machining the polygonal part, FIG 7 is an enlarged cross-sectional view of a portion of the dental implant according to the present invention, and FIG 8 is a view showing a structure of an internal groove of the dental implant according to the present invention.

Referring to FIGS. 1 to 8, a dental implant 1000 according to the present invention is a structure forming an artificial dental root by being implanted into an alveolar bone according to rotation about an axis CL. The dental implant 1000 may include an internal groove 100 formed inside a top portion to enable coupling of an abutment for prosthesis supporting, and an external screw part 200 having threads formed from a top of an outer peripheral surface to a bottom thereof to enable implantation into the alveolar bone.

The internal groove 100 of the dental implant 1000 may include an upper side inclined part 110, a polygonal part 120, a boring part 130, a circular vertical part 140, and an internal screw part 150, sequentially from a top entrance of the internal groove 100 toward a lower side.

The upper side inclined part 110 may be positioned at a top entrance part of the dental implant 1000 and may have a circular cross-section and an inner diameter gradually decreasing downward. The upper side inclined part 110 extends downward from the top of the dental implant 1000 and may be formed in a tapered shape whose diameter gradually decreases downward.

According to one embodiment, as illustrated in FIG 5, an angle 01 at which the upper side inclined part 110 of the internal groove 100 is tilted relative to the axis CL may be set to range from 14° to 16°. That is, preferably, the angle θ1 at which the upper side inclined part 110 of the internal groove 100 is tilted relative to the axis CL may range from 14° to 16°.

The upper side inclined part 110 is a portion which is positioned at a topmost of the internal groove 100 and on which an abutment is seated, and both a horizontal force and a vertical force of an external force applied to the abutment may be transmitted to the upper side inclined part 110. Also, due to an inclined shape of the upper side inclined part 110, a thickness of a wall of the upper side inclined part 110 may be formed to be relatively thin in the dental implant 1000.

By setting the angle θ1 at which the upper side inclined part 110 according to the present invention is tilted relative to the axis CL to be 14° or more, an area of contact with an abutment may be increased compared to the related art, which may be advantageous for stress distribution, and by setting the angle θ1 to be 16° or less, a top thickness of the dental implant 1000 can be prevented from becoming excessively thin. That is, it may be advantageous for improving a fracture strength of the dental implant 1000.

The polygonal part 120 may be formed below the upper side inclined part 110 and may have a transverse cross-section formed in a polygonal shape. The polygonal part 120 may be disposed below the upper side inclined part 110 and may prevent an abutment inserted into the internal groove 100 from rotating about the axis CL. Although the polygonal part 120 has a hexagonal shape in the present embodiment, the shape of the polygonal part 120 is not limited thereto, and the polygonal part 120 may have various other shapes that can prevent rotation of the abutment.

The boring part 130 may be formed below the polygonal part 120 and may have a circular shape whose diameter is larger than a diameter of a circle VC1 circumscribing the polygonal shape of the polygonal part 120. The boring part 130 may be disposed below the polygonal part 120 and may be formed to have a diameter larger than the diameter of the circle VC1 circumscribing the polygonal part 120. The boring part 130 may be formed prior to the polygonal part 120.

Referring to FIG 6, the boring part 130 may prevent a phenomenon in which, when the polygonal part 120 is machined, compressive residual stress and crack nucleation are concentrated due to a base material of the upper side inclined part 110, which is plastically deformed by a punching tool 10, being jammed to a lower side of the polygonal part 120. That is, since the boring part 130 is formed, the base material of the upper side inclined part 110 mostly falls off or is partially pushed radially outward due to striking of the punching tool 10, and thus it is possible to prevent a problem in that the base material causes crack nucleation due to being excessively deformed and jammed to the lower side of the polygonal part 120. In other words, in order to prevent excessive plastic deformation of the base material, preferably, the boring part 130 may be machined first, and then the polygonal part 120 may be formed through punching.

Meanwhile, the boring part 130 may include a second circular vertical part 131, an upper side round part 132 provided above the second circular vertical part 131, and a lower side round part 133 provided below the second circular vertical part 131.

As illustrated in FIG 6, a radius of the boring part 130 may be set to be larger than a length from a geometric center to a corner on a transverse cross-section of the punching tool 10 used in the process of machining the polygonal part 120 (this length later corresponds to a radius of the circle circumscribing the polygonal part). That is, a diameter of the second circular vertical part 131 may be formed to be larger than the diameter of the circle VC1 circumscribing the polygonal part 120.

As illustrated in FIG 6B, in the related art, since a material to be machined of a base material is inevitably plastically deformed and jammed downward by a punching tool entering from above, the base material is excessively deformed, and crack nucleation occurs at multiple sites. However, as illustrated in FIG 6C, according to the present invention, a part to be machined is machined in a manner that the part to be machined is cut by a punching tool acting like a knife or scissors or a manner that a side surface of the part to be machined cannot be jammed to a lower side corner, and thus the problem shown in FIG 6B can be addressed.

Also, since the upper side round part 132 and the lower side round part 133 are provided at the boring part 130, the base material fallen off due to the punching tool may be prevented from being stuck in a corner and remaining therein without being removed. Also, since the upper side round part 132 and the lower side round part 133 are provided at the boring part 130, in the process of striking the punching tool having quadrangular corners, stress acting on corners of the boring part 130 may be efficiently distributed, and the possibility of fracture due to residual stress may be reduced.

The circular vertical part 140 may be formed below the boring part 130 and may have an abutment temporarily fastened thereto. The circular vertical part 140 has a substantially cylindrical shape that is disposed below the boring part 130, and a holding part of the abutment may be forcibly fitted inside the implant. Accordingly, the abutment may be temporarily coupled to the circular vertical part 140 even while a screw for abutment coupling is not fastened.

The internal screw part 150 may be formed below the circular vertical part 140, and the screw for abutment coupling that has a diameter smaller than a diameter of a circle VC2 inscribing the polygonal shape of the polygonal part 120 may be fastened to the internal screw part 150. The internal screw part 150 is a portion disposed below the circular vertical part 140 and may have threads formed on an inner peripheral surface.

Meanwhile, in the internal groove 100 of the dental implant 1000, the upper side inclined part 110 and the circular vertical part 140 are portions that directly come in contact with the abutment and to which an external force applied to the abutment (for example, a masticatory force including a vertical masticatory force and a horizontal masticatory force) is transmitted and are important factors in improving the strength of the dental implant 1000.

Also, according to one embodiment, as illustrated in FIG 8, a depth L1 from a topmost of the upper side inclined part 110 to a bottommost of the circular vertical part 140 may be set to range from 3 mm to 5 mm. Also, a ratio (L1/L2) of the depth L1 from the topmost of the upper side inclined part 110 to the bottommost of the circular vertical part 140 to a depth L2 from the topmost of the upper side inclined part 110 to a bottommost of the internal screw part 150 may be set to range from 0.5 to 0.7.

That is, preferably, the depth from the topmost of the upper side inclined part 110 to the bottommost of the circular vertical part 140 may range from 3 mm to 5 mm while the ratio (L1/L2) of the depth L1 from the topmost of the upper side inclined part 110 to the bottommost of the circular vertical part 140 to the depth L2 from the topmost of the upper side inclined part 110 to the bottommost of the internal screw part 150 ranges from 0.5 to 0.7.

The circular vertical part 140 is a portion to which the holding part of the abutment is fastened by being forcibly fitted, and a horizontal force of the external force applied to the abutment may be transmitted to the circular vertical part 140. In this way, since the bottommost depth L1 of the circular vertical part 140 to which the external force is transmitted is formed to be relatively deep to be half or more of the overall depth L2 of the internal groove 100, a distance from the upper side inclined part 110 to which the external force is also transmitted may be increased, which may facilitate internal stress distribution. In this way, the structure of the internal groove 100 that is advantageous for stress distribution may be advantageous for improving fatigue strength.

Also, according to one embodiment, as illustrated in FIGS. 5 and 8, a ratio (D2/D1) of a thickness D2 of a wall of the circular vertical part 140, which is perpendicular to the axis CL, to a maximum outer diameter D1 of the dental implant 1000 may be set to range from 0.15 to 0.3. Also, an inner diameter R1 of the circular vertical part 140 may be set to be 0.5 mm to 1.8 mm less than a maximum inner diameter R2 of the upper side inclined part 110.

That is, preferably, the inner diameter R1 of the circular vertical part 140 may be formed to be 0.5 mm to 1.8 mm less than the maximum inner diameter R2 of the upper side inclined part 110 while the ratio (D2/D1) of the thickness D2 of the wall of the circular vertical part 140, which is perpendicular to the axis CL, to the maximum outer diameter D1 of the dental implant 1000 ranges from 0.15 to 0.3. In this way, since the thickness D2 of the circular vertical part 140 to which the external force applied to the abutment, particularly the horizontal force, is transmitted is formed to be relatively thicker than the maximum outer diameter D1 of the dental implant 1000, it may be advantageous for improving the strength of the dental implant 1000.

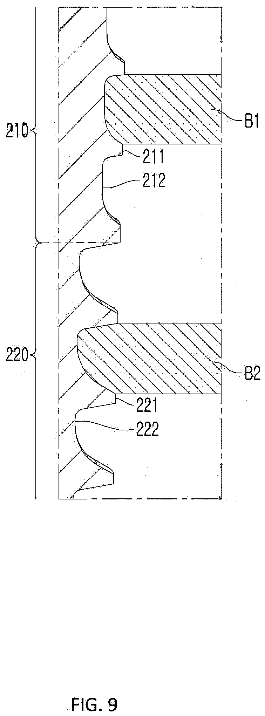

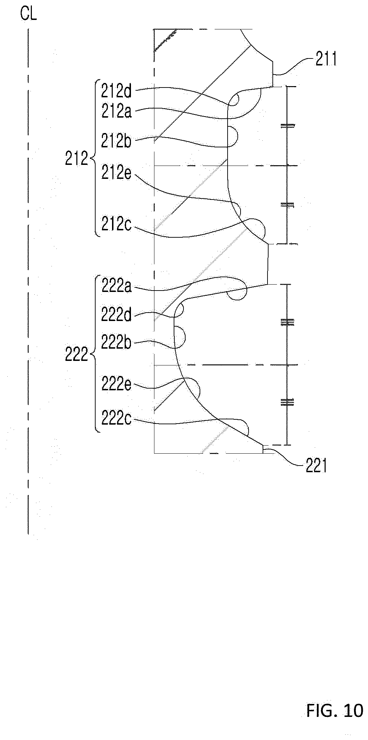

FIG 9 is a view for describing cases of machining an external screw part of the dental implant according to the present invention using bits having different shapes, and FIG 10 is an enlarged view of a portion of the external screw part according to the present invention.

Referring to FIGS. 1, 2, 4, and 5, the external screw part 200 may include an external top thread section 210 and an external bottom thread section 220.

Also referring to FIGS. 9 and 10, the external screw part 200 may include the external top thread section 210 machined down to a predetermined section downward from a top of an outer peripheral surface of the dental implant 1000 so that first crests 211 having a first height and first valleys 212 having a first depth are formed by a first bit B 1.

Also, the external screw part 200 may include the external bottom thread section 220 machined below the external top thread section 210 so that second crests 221 having a second height and second valleys 222 having a second depth are formed by a second bit B2 having a machining surface shape and a width that are different from a machining surface shape and a width of the first bit B 1.

Here, the first height of the first crests 211 may be formed to be lower than the second height of the second crests 221. Also, the first depth of the first valleys 212 may be formed to be shallower than the second depth of the second valleys 222.

Referring to FIGS. 5 and 9, in order to form the two thread sections 210 and 220 having different thread valley depths (or thread crest heights) (H1 and H2) on the outer peripheral surface portion of the dental implant 1000 of the present invention, a thread machining is performed on a machining target surface of an implant base material by using the two bits B1 and B2 having different machining surface shapes. Here, H1 may be a thread valley depth (or thread crest height) of threads formed in the external top thread section 210 by the first bit B1, and H2 may be a thread valley depth (or thread crest height) of threads formed in the external bottom thread section 220 by the second bit B2.

In a conventional process of an implant thread machining, a bit enters a bottom of a machining target surface of an implant while an implant base material is rotated, and the bit is moved upward along a determined constant movement trajectory so as to perform the thread machining. In this case, a thread height may be adjusted by adjusting an entry depth of the bit into the machining target surface of the implant base material.

In the dental implant 1000 of the present invention, when the external bottom thread section 220 is formed, the threads of the external bottom thread section 220 that have a large thread valley depth H2 (or a large crest height) are machined by entering the second bit B2 into the implant base material.

At the time when the machining of the threads by the second bit B2 is finished, the second bit B2 is replaced with the first bit B 1, and the machining of the threads of the external top thread section 210 that have a small thread valley depth H1 (or a small crest height) is performed.

In this case, as mentioned above, since a thread non-machining section H (see FIG 2) in which the thread machining is not performed is formed up to a predetermined depth from the topmost of the dental implant 1000, the external top thread machining of the dental implant 1000 by the first bit B 1 is not performed up to the topmost portion of the dental implant 1000, and the thread machining may be finished at a point spaced apart downward by a predetermined distance from the topmost of the dental implant 1000.

Meanwhile, in order to machine the crests 211 and 221 having the same pitch P on the external surface of the dental implant 1000, a difference in shape of a machining surface of each end portion of the second bit B2 performing the external bottom thread machining of the dental implant 1000 and the first bit B1 performing the external top thread machining of the dental implant 1000 is required to be accompanied.

When the bits having the same end portion machining surface shape are used to perform machining of the external bottom thread section 220 and the external top thread section 210, crest widths of the first crests 211 of the external top thread section 210 having small valley depths are widened. Therefore, when the dental implant 1000 is implanted into an alveolar bone, a relatively large torque is required, which may make it difficult to implant the dental implant 1000 and also cause damage to the alveolar bone.

On the other hand, in the present invention, the thread machining is performed by varying the shape and width of the end portion machining surfaces of the first bit B1 and the second bit B2 that are configured to machine the external top thread section 210 and the external bottom thread section 220, respectively. Therefore, a thread structure in which the pitch P of each thread is the same and the crest width W (see FIG 2) of each thread is the same although the heights of the crests 211 and 221 formed at the external top thread section 210 and the external bottom thread section 220, respectively, are different from each other may be formed.

In this way, when the crest width W of the threads is formed to be narrow, an area of the valleys 212 and 222 is increased, and thus an advantageous effect in a blasting process or a coating process may be obtained.

Referring to FIG 4, the dental implant 1000 of the present invention may be formed such that the bottom of the external top thread section 210 is positioned downward to a lower side position by 2 to 4 threads from a bottom surface of the boring part 130 inside the dental implant 1000 as a starting point when the external top thread section 210 having the threads that have small heights (or valley depths) is formed.

In this manner, when the external top thread section 210 is disposed such that the bottommost of the external top thread section 210 is positioned downward by 2 to 4 threads from the bottom surface of the boring part 130 inside the dental implant 1000, since the thicknesses of the polygonal part 120 and the circular vertical part 140 formed by a punching process can be indirectly reinforced, stability to protect against fracture can be improved.

Meanwhile, referring to FIG 10, the first valleys 212 of the external top thread section 210 and the second valleys 222 of the external bottom thread section 220 may include first curved parts 212d and 222d connecting from upper portions 212a and 222a of the valleys to side portions 212b and 222b thereof and second curved parts 212e and 222e connecting from the side portions 212b and 222b of the valleys to lower portions 212c and 222c thereof.

In this way, since the first curved parts and the second curved parts are formed at corner sides of the valleys 212 and 222, when the dental implant 1000 is implanted into the alveolar bone, stress concentrated on the corner sides of the valleys 212 and 222 can be distributed, and stability to protect against fracture of the dental implant 1000 can be improved.

According to one embodiment, as illustrated in FIG 10, the first valleys 212 of the external top thread section 210 and the second valleys 222 of the external bottom thread section 220 may be formed to be horizontally asymmetrical about a virtual line that is perpendicular to the axis CL and passes through a center of a width of the valleys. Here, preferably, a curvature of the first curved parts 212d and 222d may be formed to be larger than a curvature of the second curved parts 212e and 222e.

That is, a lower portion of the valleys 212 and 222 is formed to be relatively gentler than an upper portion of the valleys 212 and 222, and accordingly, when the dental implant 1000 enters the alveolar bone, the second curved parts 212e and 222e having a relatively gentler slope may make it relatively easy to implant the dental implant 1000 into the alveolar bone, and convenience of the implantation can be improved. When entering the alveolar bone is complete, since the alveolar bone in the valleys 212 and 222 is pressed from above by the first curved parts 212d and 222d having a relatively steeper slope, stability of the implantation can be improved.

Meanwhile, referring to FIG 2, a cutting edge 223 formed to be partially cut may be provided at a bottom of the outer peripheral surface of the dental implant 1000 to improve stability of implantation of the dental implant 1000, and the cutting edge 223 may include a reverse helical section formed in the opposite direction of a helical direction of the crests 211 and 221.

Alternatively, the cutting edge 223 may include a helical section formed in the helical direction of the crests 211 and 221. Also, the cutting edge 223 may include a linear section in which a portion of the cutting edge 223 is parallel to the axis CL. Here, the portion of the cutting edge 223 having the linear section may be disposed at the bottom of the cutting edge 223.

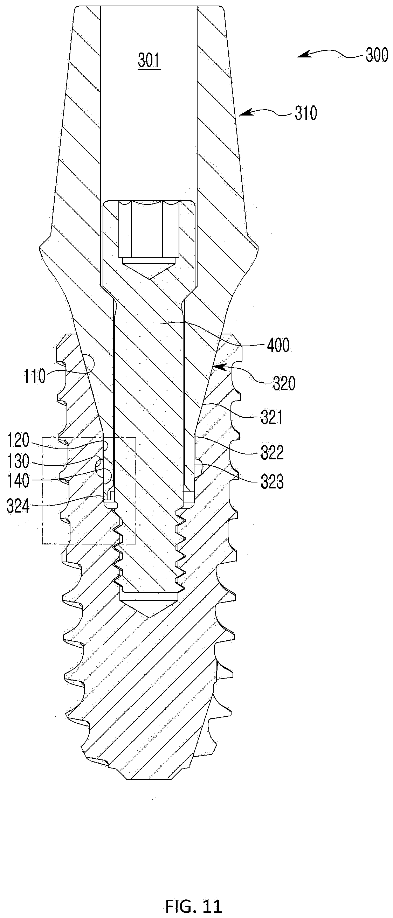

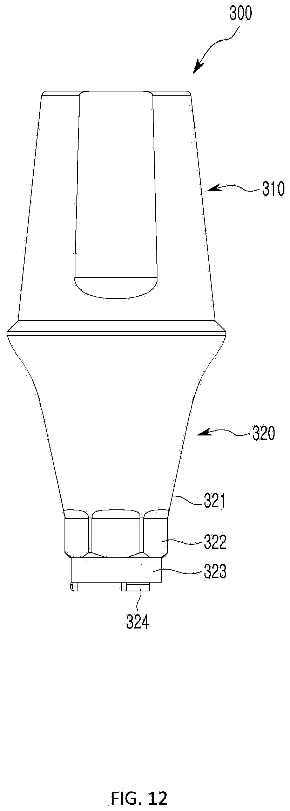

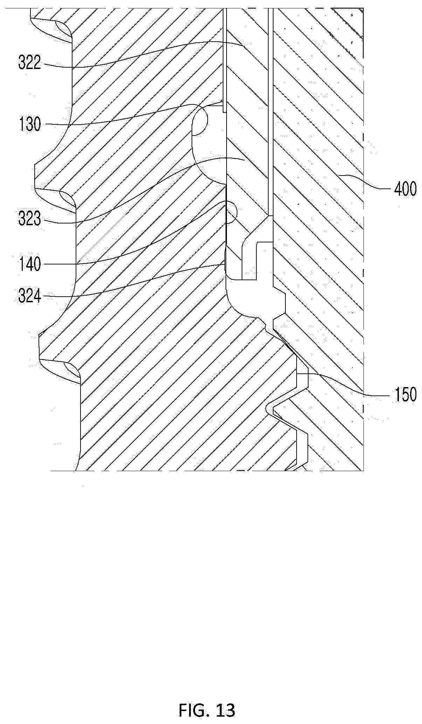

FIG 11 is a cross-sectional view of a dental implant assembly according to the present invention, FIG 12 is a front view of an abutment according to the present invention, and FIG 13 is an enlarged view of a portion of FIG 11.

Referring to FIGS. 11 to 13, a dental implant assembly according to the present invention may include the dental implant 1000, an abutment 300, and a fastening screw 400.

The abutment 300 may be coupled to the dental implant 1000 to support a prosthesis and may have a fastening screw insertion hole 301 formed therein which extends from a top of the abutment 300 to a bottom thereof.

The abutment 300 includes an upper side part 310 configured to protrude to an outer portion of the dental implant 1000 and have a prosthesis attached thereto and a lower side part 320 disposed below the upper side part 310 and partially inserted into the internal groove 100 of the dental implant 1000.

The lower side part 320 may include a tapered insertion part 321, a rotation preventing part 322, a cylindrical part 323, and a holding part 324, sequentially from an upper side.

The tapered insertion part 321 may be inserted into and seated on the upper side inclined part 110 of the dental implant 1000 and may be formed in a shape that corresponds to the upper side inclined part 110.

The rotation preventing part 322 may be disposed below the tapered insertion part 321 and inserted into the polygonal part 120 of the dental implant 1000 to constrain rotation of the abutment 300 relative to the dental implant 1000. The rotation preventing part 322 may be formed in a shape that corresponds to the polygonal part 120.

The cylindrical part 323 may be disposed below the rotation preventing part 322 and may be formed in a substantially cylindrical shape. The cylindrical part 323 may have at least one portion inserted into the circular vertical part 140 of the dental implant 1000. More specifically, at least one portion of the cylindrical part 323 may be inserted into the circular vertical part 140 together with the holding part 324.

The holding part 324 may be disposed below the cylindrical part 323 and may be, when the abutment 300 is inserted into the dental implant 1000, elastically forcibly fitted into an inner peripheral surface of the circular vertical part 140 and temporarily fix the abutment 300 to the dental implant 1000. That is, the holding part 324 is for temporarily fixing the abutment 300 to the inner peripheral surface of the circular vertical part 140. The holding part 324 may be provided as a plurality of holding parts 324 that are disposed to be spaced apart along a periphery of the bottom of the cylindrical part 323. Also, the holding part 324 may be provided as a single holding part 324 that is formed to form a closed loop along the periphery of the bottom of the cylindrical part 323. Examples of a closed loop shape may include a circular shape, an elliptical shape, a polygonal shape, and the like.

The fastening screw 400 may have a lower portion screw-coupled to the internal screw part 150 of the dental implant 1000 in a state in which the fastening screw 400 is inserted into the fastening screw insertion hole 301 of the abutment 300, and in this way, the fastening screw 400 may firmly fix the abutment 300 temporarily fixed to the dental implant 1000.

According to one aspect of the present invention, inclination of an upper side inclined part of an internal groove of an implant relative to an axis is set to a specific range to increase an area of contact with an abutment, which is advantageous for stress distribution and prevents a top thickness of the implant from being excessively thin, thereby improving the strength of the implant.

Also, the bottommost depth of a circular vertical part of the internal groove of the implant to which an external force is applied through the abutment is formed to be relatively deep to be half or more of the overall depth of the internal groove. In this way, a distance from the upper side inclined part to which an external force is applied through the abutment is increased, which facilitates internal stress distribution and may be advantageous for improving the strength of the implant.

Also, a thickness of the circular vertical part is formed to be thick relative to the maximum outer diameter of the implant, which may be advantageous for improving the strength of the implant.

Also, since a first curved part is formed at an upper side corner of valleys of external threads, and a second curved part is formed at a lower side corner thereof, when the implant is implanted into the alveolar bone, stress concentrated on corner sides of the valleys can be distributed, and stability to protect against fracture of the implant can be improved.

In addition, in the valleys of the external threads, a lower portion of the valleys is formed to be relatively gentler than an upper portion of the valleys, and accordingly, when the implant enters the alveolar bone, the second curved part having a relatively gentler slope may make it relatively easy to implant the implant into the alveolar bone, and convenience of the implantation can be improved. When entering the alveolar bone is complete, since the alveolar bone in the valleys is pressed from above by the first curved part having a relatively steeper slope, stability of the implantation can be improved.

The advantageous effects of the present invention are not limited to those described above and should be understood as including all other advantageous effects that can be inferred from the detailed description of the present invention or the configuration of the invention stated in the claims.

The above description of the present invention is only for illustrative purposes, and those of ordinary skill in the art to which the present invention pertains should understand that the present invention may be easily modified into other specific forms without changing the technical spirit or essential features of the present invention. Therefore, the above-described embodiments should be understood as illustrative, instead of limiting, in all aspects. For example, each component described as a single type may be implemented in a distributed manner, and likewise, components described as being distributed may be implemented in a combined form.

The scope of the present invention is shown by the claims below, and all changes or modifications derived from the meaning and scope of the claims and their equivalent concepts should be construed as falling within the scope of the present invention.

## Claims

1. A dental implant forming an artificial dental root by being implanted into an alveolar bone according to rotation about an axis, the dental implant comprising:
an internal groove formed inside a top portion to enable coupling of an abutment for prosthesis supporting; and
an external screw part having threads formed from a top of an outer peripheral surface to a bottom thereof to enable implantation into the alveolar bone,
wherein the internal groove includes an upper side inclined part positioned at a top entrance part of the dental implant and having a circular cross-section and an inner diameter gradually decreasing downward, a polygonal part formed below the upper side inclined part and having a transverse cross-section formed in a polygonal shape, a boring part formed below the polygonal part and having a circular shape whose diameter is larger than a diameter of a circle circumscribing the polygonal shape of the polygonal part, a circular vertical part formed below the boring part, and an internal screw part formed below the circular vertical part and having threads for abutment coupling, whose diameter is smaller than a diameter of a circle inscribing the polygonal shape of the polygonal part, formed thereon,
wherein an angle at which the upper side inclined part of the internal groove is tilted relative to the axis is set to range from 14° to 16°.

2. The dental implant of claim 1, wherein a ratio of a thickness of a wall of the circular vertical part, which is perpendicular to the axis, to a maximum outer diameter of the dental implant is set to range from 0.15 to 0.3.

3. The dental implant of claim 1, wherein an inner diameter of the circular vertical part is set to be 0.5 mm to 1.8 mm less than a maximum inner diameter of the upper side inclined part.

4. The dental implant of claim 1, wherein a ratio of a depth from a topmost of the upper side inclined part to a bottommost of the circular vertical part to a depth from the topmost of the upper side inclined part to a bottommost of the internal screw part is set to range from 0.5 to 0.7.

5. The dental implant of claim 1, wherein the depth from the topmost of the upper side inclined part to the bottommost of the internal screw part is set to range from 4 mm to 7 mm.

6. The dental implant of claim 1, wherein the depth from the topmost of the upper side inclined part to the bottommost of the circular vertical part is set to range from 3 mm to 5 mm.

7. The dental implant of claim 1, wherein the external screw part includes:
an external top thread section machined down to a predetermined section downward from a top of an outer peripheral surface of the dental implant so that first crests having a first height and first valleys having a first depth are formed by a first bit; and
an external bottom thread section machined below the external top thread section so that second crests having a second height and second valleys having a second depth are formed by a second bit having a machining surface shape and a width that are different from a machining surface shape and a width of the first bit,
wherein the first height of the first crests is formed to be smaller than the second height of the second crests, and the first depth of the first valleys is formed to be smaller than the second depth of the second valleys.

8. The dental implant of claim 7, wherein the threads of the external top thread section and the external bottom thread section have the same pitches and the same crest widths.

9. The dental implant of claim 7, wherein the first valleys and the second valleys include a first curved part connecting from an upper portion of the valley to a side portion thereof and a second curved part connecting from the side portion of the valley to a lower portion thereof.

10. The dental implant of claim 9, wherein a curvature of the first curved part is larger than a curvature of the second curved part.

11. The dental implant of claim 7, wherein the first valleys and the second valleys are formed to be horizontally asymmetrical about a virtual line that is perpendicular to the axis and passes through a center of a width of the valleys.

12. The dental implant of claim 1, wherein a cutting edge formed to be partially cut is provided at a bottom of the outer peripheral surface of the dental implant, and the cutting edge includes a reverse helical section formed in an opposite direction of a helical direction of the threads and a helical section formed in the helical direction of the threads.

13. A dental implant assembly comprising:
a dental implant forming an artificial dental root by being implanted into an alveolar bone according to rotation about an axis; and
an abutment coupled to the dental implant to support a prosthesis and having a fastening screw insertion hole formed therein, which extends from a top of the abutment to a bottom thereof to enable insertion of a fastening screw,
wherein the dental implant includes an internal groove formed inside a top portion to enable coupling of an abutment, and an external screw part having threads formed from a top of an outer peripheral surface to a bottom thereof to enable implantation into the alveolar bone,
wherein the internal groove includes an upper side inclined part positioned at a top entrance part of the dental implant and having a circular cross-section and an inner diameter gradually decreasing downward, a polygonal part formed below the upper side inclined part and having a transverse cross-section formed in a polygonal shape, a boring part formed below the polygonal part and having a circular shape whose diameter is larger than a diameter of a circle circumscribing the polygonal shape of the polygonal part, a circular vertical part formed below the boring part, and an internal screw part formed below the circular vertical part and having threads for abutment coupling, whose diameter is smaller than a diameter of a circle inscribing the polygonal shape of the polygonal part, formed thereon,
wherein an angle at which the upper side inclined part of the internal groove is tilted relative to the axis is set to range from 14° to 16°.

14. The dental implant assembly of claim 13, wherein:
the abutment includes an upper side part configured to protrude to an outer portion of the dental implant and have the prosthesis attached thereto and a lower side part disposed below the upper side part and inserted into the internal groove; and
the abutment further includes a holding part disposed at a bottom of the lower side part and configured to be elastically deformed and forcibly fitted into an inner circumferential surface of the circular vertical part to temporarily fix the abutment to an inner portion of the dental implant when the abutment is inserted into the dental implant.

15. The dental implant assembly of claim 14, wherein the holding part is provided as a plurality of holding parts that are disposed to be spaced apart along a periphery of the bottom of the lower side part or is provided as a single holding part that is formed to form a closed loop along the periphery of the bottom of the lower side part.
